(19) **Europäisches Patentamt**
**European Patent Office**
**Office européen des brevets**

(11) **EP 2 699 339 B1**

(12) **FASCICULE DE BREVET EUROPEEN**

(45) Date de publication et mention de la délivrance du brevet:
**27.05.2015 Bulletin 2015/22**

(21) Numéro de dépôt: **12719311.8**

(22) Date de dépôt: **23.04.2012**

(51) Int Cl.:
***B01J 13/14*** *(2006.01)*

(86) Numéro de dépôt international:
**PCT/EP2012/057350**

(87) Numéro de publication internationale:
**WO 2012/143546 (26.10.2012 Gazette 2012/43)**

(54) **PROCEDE ET SYSTEME DE PRODUCTION DE MICROCAPSULES CALIBREES**

VERFAHREN UND SYSTEM ZUR HERSTELLUNG VON KALIBRIERTEN MIKROKAPSELN

METHOD AND SYSTEM FOR PRODUCING CALIBRATED MICROCAPSULES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.04.2011 FR 1153526**

(43) Date de publication de la demande:
**26.02.2014 Bulletin 2014/09**

(73) Titulaires:
• **Université Technologie de Compiègne-UTC**
**60200 Compiègne (FR)**
• **Centre National de la Recherche Scientifique (CNRS)**
**75016 Paris (FR)**

(72) Inventeurs:
• **LECLERC, Eric**
**F-60280 Margny Les Compiègne (FR)**
• **SALSAC, Anne-Virginie**
**F-60280 Margny Les Compiègne (FR)**
• **BARTHES-BIESEL, Dominique**
**F-60200 Compiègne (FR)**
• **CHU, Thi Xuan**
**F-60200 Compiègne (FR)**

(74) Mandataire: **Regimbeau**
**20, rue de Chazelles**
**75847 Paris Cedex 17 (FR)**

(56) Documents cités:
**US-A1- 2011 014 297**

• **DATABASE WPI Week 200722 Thomson Scientific, London, GB; AN 2007-214621 XP002665063, -& JP 2007 044692 A (JAPAN SCI&TECHNOLOGY AGENCY) 22 février 2007 (2007-02-22)**
• **DATABASE WPI Week 200721 Thomson Scientific, London, GB; AN 2007-203697 XP002665064, -& JP 2007 038223 A (JAPAN SCI & TECHNOLOGY AGENCY) 15 février 2007 (2007-02-15)**
• **DATABASE WPI Week 200461 Thomson Scientific, London, GB; AN 2004-628588 XP002665065, -& JP 2004 237177 A (JAPAN SCI&TECHNOLOGY AGENCY) 26 août 2004 (2004-08-26)**
• **YEH C H ET AL: "Using a T-junction microfluidic chip for monodisperse calcium alginate microparticles and encapsulation of nanoparticles", SENSORS AND ACTUATORS A, ELSEVIER SEQUOIA S.A., LAUSANNE, CH, vol. 151, no. 2, 29 avril 2009 (2009-04-29), pages 231-236, XP026053137, ISSN: 0924-4247, DOI: 10.1016/J.SNA.2009.02.036 [extrait le 2009-03-14]**
• **YANG ET AL: "Using a cross-flow microfluidic chip and external crosslinking reaction for monodisperse TPP-chitosan microparticles", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, SWITZERLAND, vol. 124, no. 2, 7 juin 2007 (2007-06-07), pages 510-516, XP022107839, ISSN: 0925-4005, DOI: 10.1016/J.SNB.2007.01.015**

**Description**

DOMAINE TECHNIQUE GENERAL

La présente invention se rapporte au domaine de la microencapsulation.

ETAT DE L'ART

La microencapsulation est un procédé par lequel on enferme un produit dans des capsules micrométriques généralement sphériques. Ces microcapsules sont constituées d'une membrane qui isole temporairement le produit contenu du milieu extérieur.

Selon les molécules encapsulées, il existe des applications nombreuses dans les domaines de l'agriculture (engrais), de la santé (médicaments), des cosmétiques (crèmes) etc.... Dans l'industrie du textile, ce procédé permet par exemple d'emprisonner un parfum ou un principe actif cosmétique se déposant sur la peau grâce à des microcapsules localisées dans les fibres même d'un vêtement.

Dans le domaine de la santé on peut par exemple utiliser les microcapsules afin de réaliser la délivrance d'une quantité précise de principe actif qui se libérera de façon contrôlée dans l'organisme. Ces microparticules peuvent notamment être injectées en intra-musculaire, ou directement dans un tissu. La libération du médicament peut durer plusieurs mois.

Les microcapsules permettent en effet une grande variété de relargage. Cette libération peut être brutale, dans le cas d'une destruction mécanique de la membrane. Ainsi, certains supports matériels de communication, par exemple des publicités pour un parfum, présentent une « zone olfactive » à gratter, cette zone étant recouverte de microcapsules contenant des gouttes du parfum. En grattant, on écrase les microcapsules et le parfum est libéré.

Alternativement, la membrane peut rester présente tout le long de la libération du contenu, celle-ci s'effectuant par diffusion progressive à travers la membrane notamment pour une encapsulation de médicaments à libération contrôlée.

Dans ce dernier cas, le choix des propriétés mécaniques et chimiques de la membrane est fondamental. Selon la cinématique de libération voulue, et selon le milieu dans lequel les microcapsules sont destinées à être utilisées, il faut adapter le volume des microcapsules, le matériau de la membrane, son épaisseur, sa résistance, sa rigidité...

Pour réaliser de telles microcapsules à libération contrôlée, la réticulation est parfois employée. La réticulation est la formation d'une structure tridimensionnelle solide et quasiment insoluble, par polymérisation de précurseurs à l'interface entre une solution et des gouttes en suspension du fluide à microencapsuler, cette structure tridimensionnelle constituant la membrane.

Dans la réticulation dite interfaciale, certains réactifs de réticulation peuvent être contenus dans la solution, alors que les autres réactifs sont dans les gouttes en suspension - lesdites gouttes étant destinées à être encapsulées par les membranes qui seront créées par réticulation. A l'interface entre la solution et les gouttes, les réactifs se rencontrent et réagissent.

Alternativement, la réticulation peut être provoquée in-situ par exemple sous l'effet de la chaleur, sous l'effet d'une irradiation, ou simplement en présence d'un catalyseur.

En contrôlant le temps de réticulation, on contrôle l'épaisseur de la membrane et la densité de pores.

Des méthodes connues de microencapsulation consistent à choisir une solution (par exemple un ester gras biocompatible) non miscible avec le fluide à encapsuler, et à les mettre en émulsion dans des cuves. Le fluide à encapsuler est alors dispersé dans la solution sous forme de microgouttelettes. La réticulation est ensuite mise en oeuvre. On récupère enfin des microgouttelettes encapsulées dont la taille et les propriétés mécaniques ne sont toutefois pas uniformes.

Par un tamisage, on peut éliminer les microcapsules trop grosses. Mais les propriétés mécaniques des microcapsules restantes et en particulier l'épaisseur de leur membrane demeurent indéterminées. En outre, il n'est pas possible d'éliminer les microcapsules trop petites.

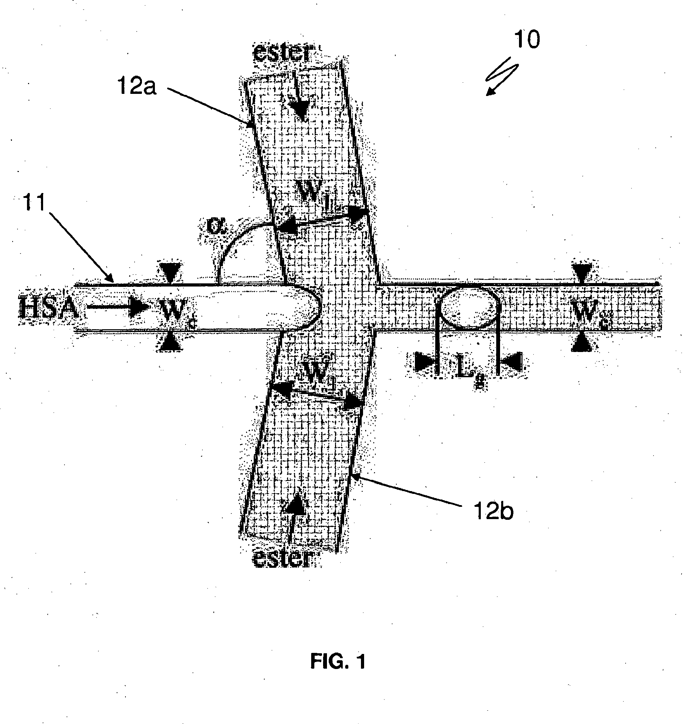

Le document "Flow of two immiscible liquids with low viscosity in Y shaped microfluidic systems: effect of geometry" (P. He, D. Barthès-Biesel et E. Leclerc, Microfluidics and Nanofluidics, 24 décembre 2009) décrit un microsystème 10 en forme de Y, représenté sur la figure 1, permettant la formation une à une de microgouttelettes de taille uniforme. Le fluide à encapsuler f1 est injecté dans l'axe du Y (microcanal central 11), et le second fluide f2 non miscible est injecté latéralement dans les branches du Y (microcanaux latéraux 12).

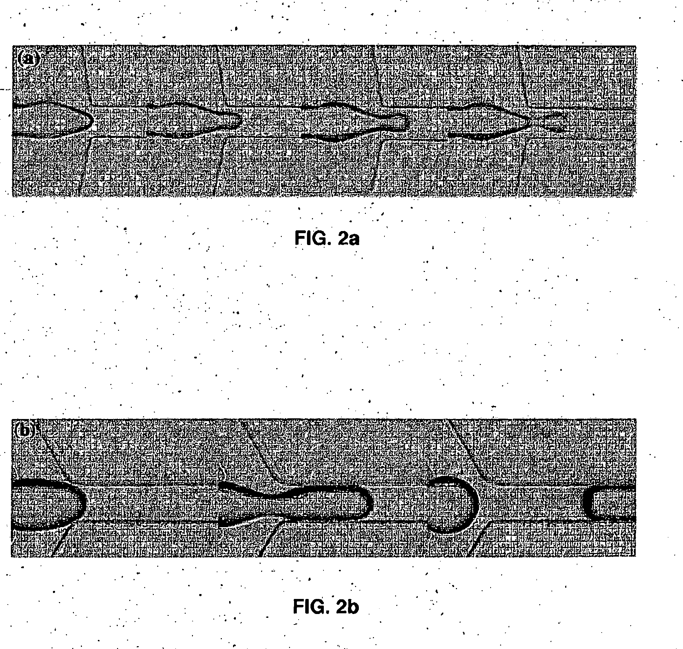

De par l'augmentation des forces de cisaillement par rapport aux forces de tension superficielle autour du premier fluide f1 lors de sa progression dans le microcanal central 11, des microgouttelettes se détachent à intervalle réguliers comme l'on voit sur la figure 2a. Cette figure représente une expérience menée dans un microsystème analogue à celui de la figure 1, pour laquelle le fluide f1 est une solution à 20% d'albumine humaine (HSA) dans une solution tampon phosphate à un pH de 9.8, et le fluide f2 est un ester gras biocompatible appelé le dragoxat® (ou 2-éthylhexyl 2-éthylhexanoate). Les largeurs Wc et W1 des canaux sont respectivement 100 et 200 $\mu$m

En outre, la variation relative des débits d'injection Q1 et Q2 respectivement du premier fluide f1 et du second fluide f2 permet de modifier la taille des microgouttelettes. Ainsi si l'on augmente Q1 à Q2 constant, on obtient des microgouttelettes plus volumineuses comme l'on voit sur la figure 2b (mêmes fluides, débit Q1 doublé).

Ce dispositif permet seulement d'obtenir des microgouttelettes de taille uniforme et non des microcapsules. Pour former des microcapsules, la membrane doit encore être générée lors d'une étape supplémentaire de réticulation qui entraine les mêmes difficultés d'appréciation de ses propriétés physiques. En outre, les lois qui lient les débits des fluides, les sections des canaux et les angles avec le diamètre de microgouttelettes produites dans un tel microsystème restent particulièrement complexes et il sera peu évident de choisir directement les bons paramètres qui permettront d'obtenir des microgouttelettes de la taille souhaitée.

Pour toutes ces raisons, les procédés et systèmes de microencapsulation connus restent à améliorer.

JP 2007 044692 A décrit un procédé de production de microcapsules, caractérisé en ce qu'il comprend des étapes suivantes: 1) production de microcapsules par injection dans une puce d'une première phase dispersée à un certain débit, d'une première phase continue à un certain débit et d'une seconde phase continue à un certain débit; 2) détermination du diamètre de la microcapsule observée par un ordinateur; 3) modification des débits des phases.

PRESENTATION DE L'INVENTION

La présente invention vise à permettre une production de microcapsules calibrées, à la fois en ce qui concerne leur diamètre et leurs propriétés mécaniques.

Un but annexe de l'invention est de permettre une production industrielle de microcapsules rapide, bon marché et fiable.

La présente invention se rapporte donc à un procédé de production de microcapsules présentant un diamètre calibré et au moins un paramètre caractéristique des propriétés mécaniques d'une microcapsule également calibré, procédé caractérisé en ce qu'il comprend dés étapes de :

- production de microcapsules par injection dans un microsystème de :

  • un premier fluide (f1) à encapsuler, à un premier débit (Q1),
  • un second fluide (f2) non miscible avec le premier fluide, à un second débit (Q2), et
  • un troisième fluide (f3) contenant un précurseur de la membrane de microcapsule, à un troisième débit (Q3) ;

- déformation des microcapsules par circulation desdites microcapsules dans un capillaire, le diamètre du capillaire étant du même ordre de grandeur que le diamètre calibré ;
- observation et acquisition du contour d'au moins une microcapsule déformée observée par des moyens d'acquisition optique ;
- comparaison par des moyens de traitement de données du contour acquis avec des contours d'une collection de contours de microcapsules de référence, le diamètre et au moins un paramètre caractéristique des propriétés mécaniques d'une microcapsule de référence étant connus pour chaque microcapsule de référence ;
- détermination du diamètre et de la valeur de l'au moins un paramètre caractéristique des propriétés mécaniques de la microcapsule observée par les moyens de traitement de données ;
- modification des débits (Q1, Q2, et/ou Q3) des fluides (f1, f2, f3) si l'écart entre :

  • le diamètre de la microcapsule observée déterminé et un diamètre optimal, et/ou
  • la valeur déterminée de l'au moins un paramètre caractéristique des propriétés mécaniques de la microcapsule observée et une valeur optimale de l'au moins un paramètre caractéristique des propriétés mécaniques d'une microcapsule,

est supérieur à un seuil prédéterminé.

Selon d'autres caractéristiques avantageuses et non limitatives :

- l'au moins un paramètre caractéristique des propriétés mécaniques d'une microcapsule est le module d'élasticité de la membrane de la microcapsule ;
- l'au moins un paramètre caractéristique des propriétés mécaniques d'une microcapsule de référence est le nombre capillaire associé à la microcapsule de référence ;
- ledit seuil prédéterminé est de 10% pour l'écart entre le diamètre de la microcapsule observée déterminé et le diamètre optimal, et de 30% pour l'écart entre la valeur déterminée de l'au moins un paramètre caractéristique des propriétés mécaniques de la microcapsule observée et la valeur optimale de l'au moins un paramètre caractéristique des propriétés mécaniques d'une microcapsule ;

- le microsystème comprend un microcanal central, un premier ensemble de microcanaux latéraux et un second ensemble de microcanaux latéraux, le premier fluide (f1) étant injecté dans le microcanal central, le second fluide (f2) étant injecté dans le premier ensemble de microcanaux latéraux, le troisième fluide (f3) étant injecté dans le second ensemble de microcanaux latéraux ;
- chaque microcanal du premier ensemble de microcanaux latéraux et/ou du second ensemble de microcanaux latéraux intersecte le microcanal central avec un même angle compris entre 45° et 90° ;
- le second fluide (f2) non miscible est un ester gras biocompatible ;
- le précurseur de la membrane de microcapsule contenu dans le troisième fluide (f3) est un agent de réticulation ;
- le microsystème comprend un serpentin de réticulation prolongeant le microcanal ;
- la réticulation est obtenue par irradiation des microgouttelettes en contact avec le fluide (f3) par un faisceau infrarouge, un faisceau ultraviolet, ou un faisceau d'électrons ;
- le microsystème est en polydiméthylsiloxane solidifié transparent ;
- le capillaire est un tube de verre à section cylindrique ;
- le capillaire est inséré à l'intérieur du microcanal central ;
- le capillaire présente un diamètre interne compris entre 25 et 150 $\mu$m, un diamètre externe compris entre 300 et 500 $\mu$m, et une longueur comprise entre 10 et 100 mm ;
- un réservoir de stockage de microcapsules est placé en sortie du capillaire ;
- l'étape d'acquisition du contour d'au moins une microcapsule déformée comprend la prise d'au moins une photographie de ladite microcapsule par les moyens d'acquisition optique, le contour acquis étant constitué d'une pluralité de points matérialisant la membrane de la microcapsule placés sur ladite photographie par les moyens de traitement de données ;
- l'étape d'acquisition du contour d'au moins une microcapsule déformée comprend la prise successive d'au moins deux photographies de la microcapsule par les moyens d'acquisition optique, lesdites deux photographies étant comparées par les moyens de traitement de données afin de mesurer la vitesse de circulation dans le capillaire de la microcapsule observée, cette vitesse étant prise en compte lors de l'étape de comparaison du contour acquis avec les contours d'une collection de contours de microcapsules de référence ;
- le diamètre de la microcapsule observée est directement calculé à partir du contour acquis, et dans lequel l'étape de comparaison du contour acquis avec une collection de contours de microcapsules de référence déformées par ledit capillaire consiste en la superposition de la pluralité de points acquise avec chaque contour de microcapsule déformée de référence présentant un diamètre voisin du diamètre calculé de la microcapsule observée, la valeur de l'au moins un paramètre caractéristique des propriétés mécaniques de la microcapsule observée étant déterminée par les moyens de traitement de données à partir de celui associé avec la ou les microcapsules de référence présentant un diamètre voisin du diamètre calculé de la microcapsule observée dont le contour se rapproche le plus de ladite pluralité de points ;
- l'étape de comparaison du contour acquis avec une collection de contours de microcapsules de référence déformées par ledit capillaire consiste en la superposition de la pluralité de points acquise avec chaque contour de microcapsule déformée de référence, le diamètre et la valeur de l'au moins un paramètre caractéristique des propriétés mécaniques de la microcapsule observée étant déterminés par les moyens de traitement de données à partir de ceux associés avec la ou les microcapsules de référence dont le contour se rapproche le plus de ladite pluralité de points.
- les moyens d'acquisition optique comprennent un microscope inversé et une caméra CCD haute vitesse ;
- l'étape d'acquisition de contour est mise en oeuvre pour chaque microcapsule produite par le microsystème ;
- les contours des microcapsules de référence sont des contours préalablement acquis par les moyens d'acquisition optique, les microcapsules de référence étant déformées par circulation dans le capillaire.

Un deuxième aspect de la divulgation se rapporte à un système de production de microcapsules calibrées, caractérisé en ce qu'il comprend :

- un microsystème ;
- un capillaire ;
- des moyens d'acquisition optique ;
- des moyens de traitement de données ;

le microsystème étant adapté pour produire des microcapsules à partir d'un premier fluide (f1) à encapsuler injecté à un premier débit (Q1), d'un second fluide (f2) non miscible avec le premier fluide injecté à un second débit (Q2) et d'un troisième fluide (f3) contenant un précurseur de la membrane de microcapsule injecté à un troisième débit (Q3) ;
le système étant apte à mettre en oeuvre un procédé selon le premier aspect de l'invention.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1 précédemment décrite est un schéma d'un microsystème connu permettant une production de microgouttelettes de taille uniforme ;
- les figures 2a-b précédemment décrites représentent des phases successives de formation de microgouttelettes dans deux microsystèmes connus avec des paramètres de fonctionnement différents ;
- la figure 3 est une vue de dessus d'un mode de réalisation d'un système de production de microcapsules selon un aspect de la divulgation;
- la figure 4 est un diagramme représentant les étapes d'un mode de réalisation d'un procédé de production de microcapsules selon un aspect de l'invention ;
- les figures 5a-f représentent divers contours de microcapsules déformées ;
- la figure 6 illustre la comparaison entre un contour de microcapsule déformée observée, et un contour de microcapsule de référence déformée ;
- la figure 7 illustre les grandeurs caractéristiques d'un contour de microcapsule déformée ;
- les figures 8a-d sont quatre graphiques reliant une grandeur représentative du contour d'une microcapsule déformée aux paramètres de la microcapsule.

DESCRIPTION DETAILLEE

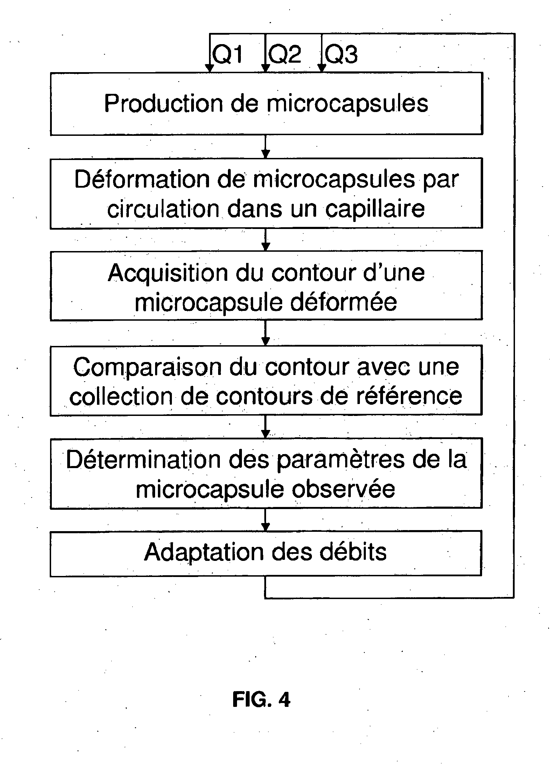

En référence à la figure 4, le procédé de production de microcapsules présentant un diamètre calibré et au moins un paramètre caractéristique des propriétés mécaniques d'une microcapsule également calibré selon l'invention comprend six étapes successives.

Par calibré, on entend conforme à une valeur optimale définie, le calibre, éventuellement avec une certaine tolérance. Par exemple en calibrant le diamètre à 100 $\mu$m à 5% près, (en d'autres termes la valeur optimale est 100 $\mu$m) les microcapsules produites présenteront un diamètre entre 95 et 105 $\mu$m. Cette tolérance est ajustable comme l'on verra plus loin.

*Production de micro capsules*

La première étape est la production de microcapsules elle-même, les microcapsules produites à l'amorçage du procédé n'étant toutefois pas encore calibrées. En effet, comme expliqué précédemment, il est peu évident de choisir directement les bons paramètres qui permettront d'obtenir des microgouttelettes de la taille souhaitée et présentant les propriétés mécaniques souhaitées. Le procédé selon l'invention propose d'amorcer la production de microcapsules en choisissant d'abord arbitrairement ces paramètres, puis en les ajustant lors d'étapes postérieures de telle sorte qu'après une courte période transitoire d'adaptation les microcapsules produites soient calibrées.

L'étape de production de microcapsules consiste donc en l'injection dans un microsystème 10 de :

- un premier fluide f1 à encapsuler, à un premier débit Q1,
- un second fluide f2 non miscible avec le premier fluide, à un second débit Q2, et
- un troisième fluide f3 contenant un précurseur de la membrane de microcapsule, à un troisième débit Q3 ;

De nombreuses architectures de microsystème 10 sont possibles. Avantageusement, on choisit un microsystème 10 comprenant le microsystème de formation de gouttelettes décrit précédemment et représenté par la figure 1, c'est-à-dire un microsystème 10 comprenant un microcanal central 11, un premier ensemble de microcanaux latéraux 12 et un second ensemble de microcanaux latéraux 13, le premier fluide f1 étant injecté dans le microcanal central 11, le second fluide f2 étant injecté dans le premier ensemble de microcanaux latéraux 12, et le troisième fluide f3 étant injecté dans le second ensemble de microcanaux latéraux 13.

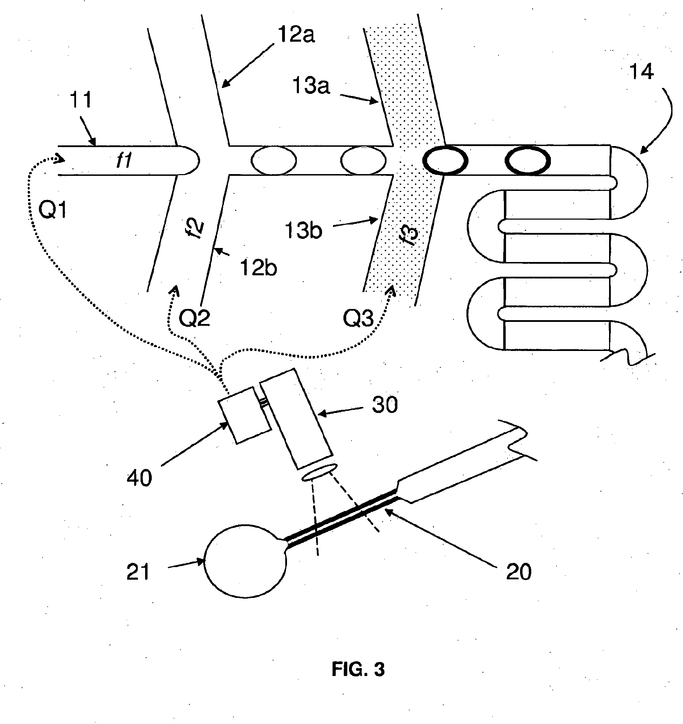

Ce microsystème 10 particulièrement préféré est « en double Y » comme représenté sur la vue d'ensemble du système de la figure 3. En d'autre termes chaque microcanal du premier ensemble de microcanaux latéraux 12 et/ou du second ensemble de microcanaux latéraux 13 intersecte le microcanal central 11 avec un même angle compris entre 45° et 90°. La géométrie en Y présente l'avantage de maintenir le fluide à encapsuler f1 centré dans le microcanal central 11. Au contraire, des jonctions en T font que le fluide impacte une paroi opposée du microcanal central 11 avant de stabiliser sa trajectoire.

Comme mentionné précédemment, le second fluide f2 non miscible est avantageusement un ester gras biocompatible (par exemple du dragoxat®).

En ce qui concerne le précurseur de la membrane de microcapsule contenu dans le troisième fluide f3, on choisit avantageusement un agent de réticulation, par exemple du chlorure de Terephthaloyl (chlorure de 1,4-benzenedicarbonyl) qui est notamment un monomère du Kelvar®. Par précurseur, on entend tout composé qui par réaction chimique, en particulier réticulation, permet de former la membrane. La réticulation interfaciale est en effet particulièrement préférée ici, puisque l'on sait qu'elle dure exactement aussi longtemps que le troisième fluide f3 et le premier fluide f1 à encapsuler sont en contact.

Pour que ce contact dure suffisamment pour qu'une membrane solide emprisonnant la microgouttelette se soit formée, le microsystème 10 comprend avantageusement un serpentin 14 de réticulation prolongeant le microcanal 11. Ce serpentin 14 est tout simplement une extension du microcanal 11, repliée sur lui-même pour gagner de la place, car sa longueur peut atteindre plusieurs dizaines de centimètres alors que les largeurs des différents microcanaux sont de l'ordre de la centaine de microns.

Encore plus avantageusement, on peut remplacer ou compléter le serpentin 14 par un dispositif d'émission d'un faisceau infrarouge, un faisceau ultraviolet, ou un faisceau d'électrons, la réticulation étant obtenue par irradiation, traitement thermique, excitation magnétique, etc., des microgouttelettes en contact avec le fluide f3. En effet, de façon particulièrement préférée le microsystème 10 est en polydiméthylsiloxane (PDMS) solidifié transparent, il est donc par exemple possible d'irradier à travers le serpentin 14. On comprendra toutefois que l'invention n'est limitée à aucun procédé de réticulation en particulier. Il est même possible que le premier fluide f1 et le troisième fluide f3 ne fassent qu'un, en d'autres termes que le fluide à encapsuler contienne directement le précurseur de membrane de microcapsule, la réticulation étant alors activée sous l'effet de l'irradiation, traitement thermique, excitation magnétique, etc. mentionnés précédemment. Dans ce cas le microsystème 10 peut présenter une structure en simple Y : un fluide f1+f3 comprenant à la fois le liquide à encapsuler et le précurseur de membrane est injecté dans le microcanal central 11, et le second fluide f2 est injecté dans l'ensemble de microcanaux latéraux 12.

Toutefois de nombreuses méthodes d'encapsulation connues ne nécessitent pas d'irradiation ni même de réticulation, et l'invention n'est limitée à aucune technique en particulier, à aucun précurseur de membrane particulier.

En sortie du microsystème 10, on dispose d'un flux de microcapsules uniformes, mais dont on ne connaît encore ni le diamètre ni les propriétés mécaniques. Aucune contrainte n'est encore appliquée sur ces microcapsules, dont on dit qu'elles sont non-déformées, par opposition à ce qui va suivre.

*Déformation des microcapsules*

Lors d'une seconde étape, on provoque la déformation des microcapsules par circulation dans un capillaire 20, le diamètre du capillaire 20 étant du même ordre de grandeur que le diamètre calibré.

Par même ordre de grandeur, on entend suffisamment fin pour que des microcapsules du diamètre calibré circulant dans le capillaire 20 présentent une déformation notable. Toutefois, si les premières microcapsules produites présentent un diamètre bien plus petit que le diamètre calibré auquel on veut parvenir, il se peut qu'elles ne soient pas déformées. Le profil d'une microcapsule non-déformée est toutefois exactement traité comme le profil de n'importe quelle microcapsule déformée comme nous le verrons plus loin. Le dispositif réagira à un tel profil de microcapsule non-déformée par une augmentation rapide du diamètre des microcapsules produites, d'où la déformation attendue après une phase de démarrage initial.

En d'autres termes, le diamètre du capillaire doit être choisi en fonction du diamètre optimal défini, et est avantageusement légèrement inférieur à ce diamètre optimal. On notera toutefois que grâce aux effets de bord, une microcapsule circulant dans un capillaire 20 légèrement plus large sera tout de même déformée.

A titre d'exemple, si l'on désire des microcapsules d'un diamètre calibré autour de 100$\mu$m (i.e. le diamètre optimal est 100$\mu$m), un capillaire de 75$\mu$m de diamètre est particulièrement adapté.

Le capillaire 20 est avantageusement un tube de verre à section cylindrique, le verre étant intéressant pour sa stabilité (pas de variation du diamètre) et ses propriétés optiques.

En effet, le profil des microcapsules déformées par le capillaire 20 dépend dé leur diamètre et de leurs propriétés mécaniques. Des études, en particulier le document « Flow of artificial microcapsules in microfluidic channels : A method for determining the elastic properties of the membrane » (Y. Lefebvre, E. Lederc, D. Barthès-Biesel, J. Walter et F. Edwards-Levy, Physics of fluids 20, 31 décembre 2008) ont montré que l'observation du profil de déformation pouvait permettre de déterminer le module d'élasticité de la membrane d'une microcapsule.

Ainsi, de façon particulièrement préférée, l'au moins un paramètre caractéristique des propriétés mécanique d'une microcapsule est le module d'élasticité (Gs) de la membrane de la microcapsule.

L'homme de l'art trouvera dans le document précédemment cité de nombreux détails sur les moyens de déformation des microcapsules. En particulier, le capillaire 20 est avantageusement inséré à l'intérieur du microcanal central 11. En outre, le capillaire 20 présente avantageusement un diamètre interne compris entre 25 et 150 $\mu$m, un diamètre externe compris entre 300 et 500 $\mu$m, et une longueur comprise entre 10 et 100 mm, ces dimensions étant encore plus avantageusement adaptées aux paramètres calibrés escomptés.

En sortie du capillaire 20, les microcapsules reprennent leur état non-déformé. Un réservoir 21 destiné au stockage de ces microcapsules peut être prévu.

*Acquisition du contour*

Déformer les microcapsules n'a d'intérêt que si l'on peut les observer, et plus particulièrement caractériser leur déformation. Le procédé selon l'invention comprend ainsi une étape d'observation et d'acquisition du contour d'au moins une microcapsule déformée observée par des moyens 30 d'acquisition optique.

Ces moyens 30 d'acquisition optique, représentés sur la figure 3, comprennent par exemple un microscope inversé et une caméra CCD haute vitesse (150 images par seconde, vitesse d'obturation inférieur à la milliseconde), lesquels étant montés de façon à observer les microcapsules au travers du capillaire 20. Il est possible de rajouter une source lumineuse sous le capillaire 20. La caméra est connectée à des moyens 40 de traitement de données (par exemple le processeur d'un ordinateur) via une carte graphique d'acquisition (par exemple une Matrox® METEOR2-MC2), les moyens 40 de traitement de données étant éventuellement couplés à des moyens de stockage (tels un disque dur).

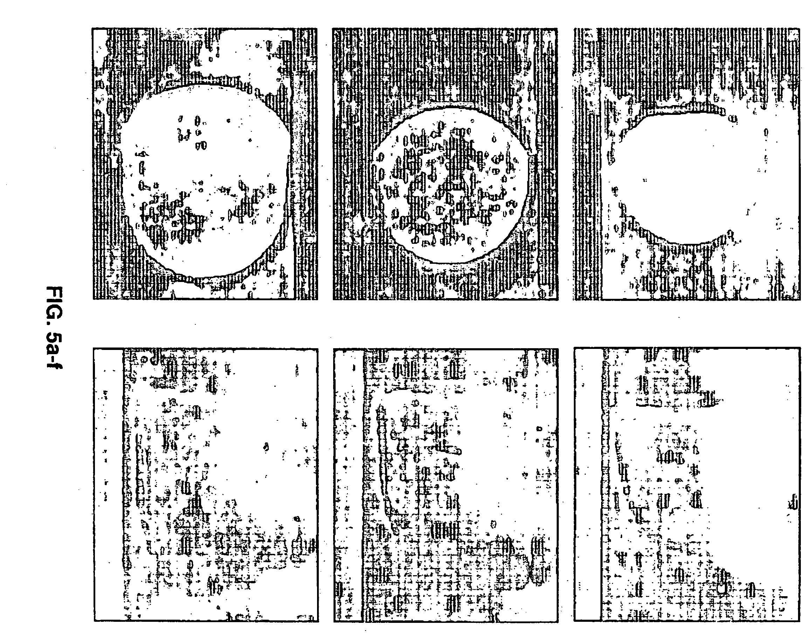

Cette étape d'acquisition du contour d'au moins une microcapsule déformée comprend alors la prise d'au moins une photographie de ladite microcapsule par les moyens 30 d'acquisition optique : on obtient une photographie du type de celles représentées par les figures 5a à 5f, transmise sous forme numérique aux moyens 40 de traitement de données, et le cas échéant stockée sur les moyens de stockage.

Comme on peut voir sur ces figures, le contour de la microcapsule déformée est bien visible : les points du contour correspondent aux points où le contraste (et plus précisément le gradient morphologique) est le plus élevé. L'acquisition de ce contour est possible par de nombreux outils informatiques de traitement d'images connus, par exemple le logiciel ImageJ, qui disposent d'algorithmes adéquats que les moyens 40 de traitement de données vont mettre en oeuvre. On citera par exemple les algorithmes de segmentation de type « ligne de partage des eaux ».

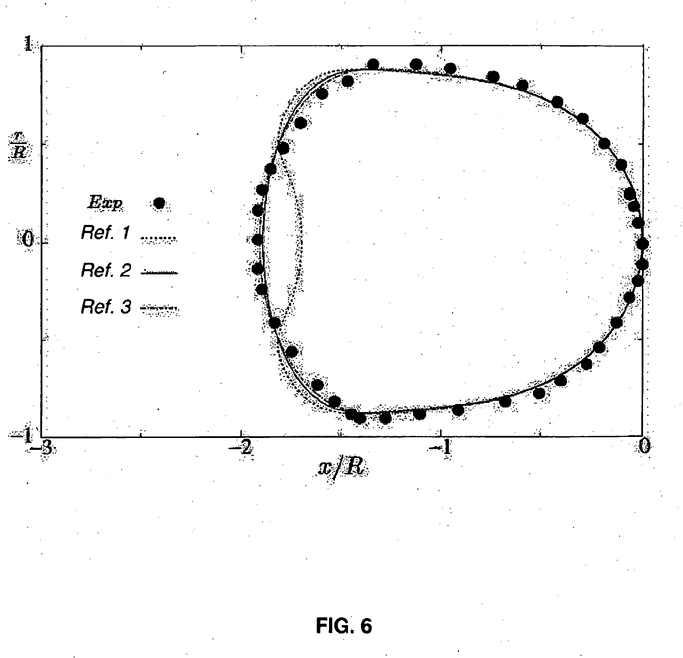

Le contour acquis est alors avantageusement fourni sous la forme d'une pluralité de points, avantageusement 30 à 50, matérialisant la membrane de la microcapsule, isolés et placés sur ladite photographie lors de son traitement par le logiciel. Un tel exemple de contour acquis est représenté sur la figure 6. Les coordonnées des points sont ici mesurées dans un repère orthonormé où l'axe des X est l'axe du capillaire 20, le point (0,0) correspondant par convention au point le plus en avant de la microcapsule déformée, et les droites Y=1 et Y= -1 aux bords du capillaire 20.

De façon particulièrement préférée, une deuxième photographie de la microcapsule déformée observée est prise. En effet, connaissant le nombre d'images acquises par seconde par les moyens 30 d'acquisition optique, on sait quel est le temps qui sépare deux prises successives (6.67ms dans le cas d'une caméra 150 frames/s). Il est possible d'en déduire la vitesse de circulation dans le capillaire 20 de la microcapsule observée en calculant la distance parcourue pendant ce laps de temps en comparant les deux photographies successives.

Cette comparaison est également effectuée par les moyens 40 de traitement de données, éventuellement également grâce au logiciel ImageJ, en repérant un même point singulier de la microcapsule déformée sur les deux photos, et en mesurant le déplacement de ce point.

En ce qui concerne la fréquence de mise en oeuvre de cette étape d'observation et d'acquisition du contour, l'invention n'est limitée à aucun schéma en particulier, mais il est souhaitable que régulièrement une microcapsule déformée soit observée afin de pouvoir suivre des éventuelles variations.

De façon particulièrement préférée, l'étape d'acquisition de contour est mise en oeuvre pour chaque microcapsule produite par le microsystème 10. Cela garantit un contrôle parfait.

*Comparaison et détermination des paramètres de la microcapsule observée*

Le contour acquis à l'étape précédente est alors traité, et notamment comparé avec des contours d'une collection de contours de microcapsules de référence, le diamètre et au moins un paramètre caractéristique des propriétés mécaniques d'une microcapsule de référence étant connus pour chaque microcapsule de référence.

Il est à noter que le paramètre caractéristique des propriétés mécaniques d'une microcapsule de référence connu pour-chaque microcapsule de référence n'est pas forcément le même paramètre que le paramètre caractéristique des propriétés mécaniques d'une microcapsule que l'on cherche à calibrer. L'homme de l'art saura utiliser avantageusement les relations existant entre les différentes propriétés mécaniques en fonction de la loi de comportement suivie par le matériau.

Il peut en outre être intéressant de travailler avec des grandeurs adimensionnelles. En particulier, si le paramètre que l'on cherche à quantifier est le module d'élasticité Gs, on peut avantageusement quantifier le nombre capillaire Ca à la place. Ca est un nombre sans dimension défini par $Ca = \mu V/Gs$, où $\mu$ et V sont la viscosité du fluide porteur et la vitesse de la capsule. En déterminant la valeur de Ca, on peut retrouver Gs comme l'on verra par la suite.

Cette comparaison permet alors de déterminer le diamètre et le paramètre caractéristique des propriétés mécaniques de la microcapsule observée grâce à un principe appelé l'analyse inverse, que nous allons expliquer avant de décrire plus en détail comment sont mises en oeuvre les étapes de comparaison et de détermination des paramètres.

*Analyse inverse*

L'analyse inverse correspond à la démarche inverse du problème direct : au lieu d'essayer de trouver la fonction qui à partir d'une déformation mesurée nous fournit les paramètres de la microcapsule déformée, on va au contraire à partir de paramètres donnés mesurer la réponse, c'est-à-dire la déformation associée.

Dans notre cas, une base de données, qui est la collection de contours de microcapsules de référence, nous donne un certain nombre de déformations. La possibilité de déterminer de manière unique les paramètres d'une microcapsule par analyse inverse provient du fait que deux couples (d,Gs) différents ne peuvent pas conduire à exactement la même déformation. C'est pourquoi si deux microcapsules présentent la même déformation, c'est qu'elles ont les mêmes paramètres. Et donc si une microcapsule présente la même déformation qu'une microcapsule de référence, c'est que ses paramètres sont ceux de la microcapsule de référence.

Cette méthode d'analyse inverse, qui permet de remonter aux propriétés mécanique de la membrane, est décrite dans « Comparison between measurements of élasticity and free amino group content for ovalbumin microcapsule membrane: discrimination of the cross-linking degree » (T. X. Chu, A.-V. Salsac, Eric Leclerc, Dominique Barthès-Biesel, Hélène Wurtz, Florence Edwards-Lévy, 3 septembre 2010).

*Mise en oeuvre de l'analyse inverse*

L'étape de comparaison du contour acquis avec une collection de contours de microcapsules de référence déformées par ledit capillaire 20 consiste avantageusement en la superposition des points du contour de la microcapsule acquise avec chaque contour de microcapsule déformée dé référence, comme l'on voit sur la figure 6. Naturellement, les contours seront représentés dans le même repère, notamment le repère orthonormé cité plus haut.

Si en particulier comme on l'a dit plus haut chaque contour de référence est associé dans une base de données avec un couple (d, Gs) alors selon un premier mode de réalisation on peut effectuer la comparaison avec chaque contour de la collection, et le diamètre et la valeur de l'au moins un paramètre caractéristique des propriétés mécaniques de la microcapsule observée sont déterminés par les moyens 40 de traitement de données comme étant ceux associés avec la ou les microcapsules de référence dont le contour se rapproche le plus de ladite pluralité de points.

Il est à noter que la vitesse de circulation (il a été montré précédemment comment la calculer) est un paramètre autre que d et Gs qui peut avoir une incidence sur la déformation. C'est pourquoi elle est avantageusement prise en compte lors de l'étape de comparaison du contour acquis avec les contours d'une collection de contours de microcapsules de référence, et tout particulièrement si chaque contour de référence est associé dans une base de données avec un couple (d, Ca). Gs se déduit facilement avec la formule $Gs = \mu V/Ca$.

Alternativement, selon un second mode de réalisation préféré, seuls les contours de référence correspondant à des microcapsules de diamètre voisin que celui de la microcapsule observées sont pris en compte lors de l'étape de comparaison. Seul le paramètre caractéristique des propriétés mécaniques de la microcapsule observée est alors déterminé grâce à l'analyse inverse. Cela implique toutefois que l'on puisse directement calculer le diamètre de la microcapsule observée à partir du contour acquis.

C'est en effet possible en faisant l'hypothèse que la microcapsule déformée est parfaitement axisymétrique (c'est-à-dire que l'on peut reconstruire selon volume en faisant une rotation du contour acquis autour de l'axe central du capillaire 20). Il est ainsi possible de calculer le volume de la microcapsule à partir du contour acquis par intégration sur le demi-contour du volume unitaire associé à chaque tranche cylindrique d'épaisseur dx de la microcapsule déformée selon l'axe du capillaire 20.

Connaissant le volume vol, $d = 2 \times \sqrt[3]{\dfrac{3vol}{4\Pi}}$ .

L'identification duquel ou desquels d'une pluralité de contours de référence connus le contour acquis se rapproche le plus se fait par une étape de « fitting » (ajustement) mise en oeuvre grâce aux moyens 40 de traitement de données (qui peuvent être les mêmes que ceux utilisés précédemment, ou bien des moyens dédiés).

Pour ce faire, on utilise une méthode d'optimisation. Par exemple on peut déterminer la « distance » au sens mathématique entre la pluralité de points et chaque contour de microcapsule de référence.

En effet, il est possible de projeter orthogonalement chaque point sur le contour avec lequel on fait la comparaison, d'en déduire la distance entre le point et le contour (égale à la distance entre le point et sa projection), et de définir la distance globale comme la somme des distances point par point. Si l'on nomme D la fonction qui à un contour de microcapsule de référence associe la distance au sens où l'on vient de la définir avec la pluralité de points, on obtient sur l'exemple de la figure 6 :

$$D(R1) > D(R2) > D(R3)$$

C'est donc Ref 3 qui est le contour qui correspond le mieux à Exp, c'est-à-dire le contour acquis. Les logiciels décrits précédemment sont capables d'exécuter ce type de calcul sur les moyens 40 de traitement.

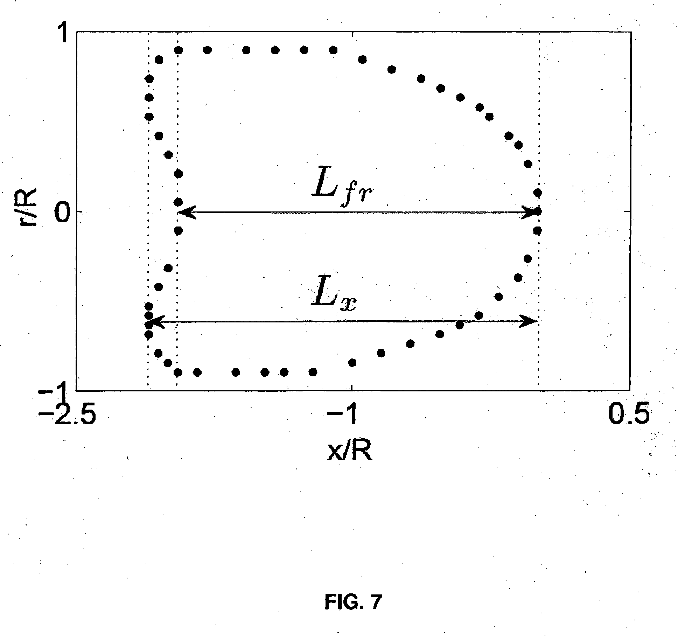

De façon préférée, l'étape de fitting est réalisée sur des grandeurs géométriques adimensionnelles, par exemple $L_x/R$, $L_{fr}/R$, $(L_x-L_{fr})/R$, $S/R^2$ qu'on peut calculer à partir du contour déformé (voir figure 7). Ces grandeurs permettent de caractériser complètement un contour. On cherche dans la base de données, le contour de référence dont les grandeurs géométriques adimensionnelles sont toutes similaires aux valeurs associées au profil expérimental, par exemple l'optimum, c'est-à-dire le contour de référence présentant le moins d'écart en moyenne avec les grandeurs adimensionnelles mentionnées.

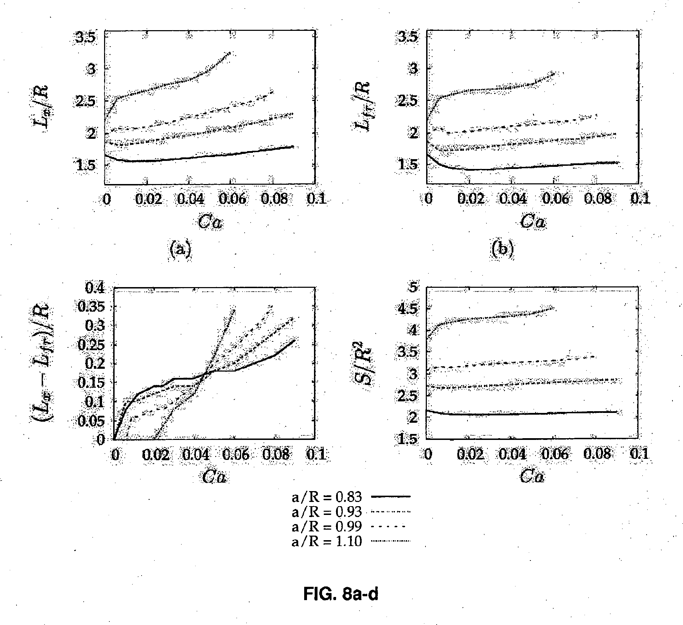

A titre d'exemple, les figures 8a-d montrent l'évolution des grandeurs géométriques adimensionnelles de référence en fonction du nombre capillaire.

Alternativement, plutôt que de chercher l'optimum (c'est-à-dire l'unique contour de référence lors du fitting, il est possible d'appliquer des tolérances sur chacune des grandeurs géométriques adimensionnelles. La table 1 ci-dessous montre des valeurs particulièrement préférées de tolérances utilisées. Ces tolérances sont de l'ordre de grandeur des erreurs expérimentales, qui proviennent par exemple du flou des contours acquis. On remarque que ce tableau comprend une erreur admissible sur a/R (a est le rayon de la microcapsule observée, valant d/2), c'est-à-dire l'erreur d'appréciation du diamètre de la microcapsule si l'on se place dans le cas où l'on effectue la comparaison seulement sur les contours des microcapsules de référence présentant un diamètre voisin du diamètre de la microcapsule observée, déterminé préalablement comme expliqué précédemment. On note que la tolérance sur ce paramètre est plus faible que sur les autres. Cette méthode donne une pluralité de contours de référence admissibles.

Table 1

| Parameters | $\Delta(a/R)$(%) | $\Delta(L_x/R)$ (%) | $\Delta(L_{fr}/R)$ (%) | $\Delta(S/R^2)$ (%) |
|---|---|---|---|---|
| Tolerance | 2 | 4 | 5 | 4 |

La valeur de l'au moins un paramètre caractéristique des propriétés mécaniques de la microcapsule observée est alors déterminée par les moyens 40 de traitement de données à partir de ceux associés avec les microcapsules de référence des contours de référence admissible, notamment en faisant la moyenne.

L'invention n'est bien entendu pas limitée à l'une de ces méthode de détermination du ou des contours les plus approchant, et l'homme du métier saura utiliser toute méthode permettant de retrouver un ou plusieurs paramètres de la microcapsule observée grâce à une collection de microcapsules de référence. Cette méthode pourra notamment conduire à l'identification d'un ou plusieurs contours admissible, se baser sur des grandeurs adimensionnelles caractéristiques du contour ou sur les coordonnées d'une pluralité de points du contour, et inclure ou non une étape préalable de détermination du diamètre par des considérations géométriques.

*Constitution de la collection de contours de microcapsules de référence*

La collection de contours de microcapsules de référence peut être avantageusement constituée expérimentalement et/ou numériquement.

Dans le premier cas, les contours des microcapsules de référence sont des contours préalablement acquis par les moyens 30 d'acquisition optique, les microcapsules de référence étant déformées par circulation dans le même capillaire 20.

Soit on connaît directement les propriétés mécaniques (et donc la valeur des paramètres caractéristiques de ces propriétés mécaniques) des microcapsules que l'on fait circuler dans le capillaire 20, et en conséquence on renseigne directement la base de données en associant au contour de référence obtenu ces paramètres (en particulier Gs), soit on ne les connaît pas parfaitement.

C'est pour ce second cas qu'il est intéressant de choisir Ca comme paramètre caractéristique des propriétés mécaniques d'une microcapsule de référence. C'est en effet un paramètre mécanique de l'écoulement dans le capillaire 20, que l'on peut retrouver grâce à la mécanique des fluides.

Alternativement, on peut procéder numériquement. Cette analyse est décrite par exemple dans le document « QUÉGUINER, C. & BARTHÈS-BIESEL, D. 1997 Axisymmetric motion of capsules through cylindrical channels. J.

Fluid Mech. 348, 349-376 ». Cette analyse numérique permet de calculer, connaissant les paramètres géométriques d'une microcapsule et des paramètres physiques tels que la température ou le rayon R du capillaire 20, les grandeurs géométriques sans dimension $L_x/R$, $L_{ff}/R$, $(L_x-L_{fr})/R$, $S/R^2$ (qui sont représentées sur la figure 7) que présenterait le contour si cette microcapsule était déformée par ledit capillaire 20.

L'invention n'est bien entendu limitée à aucune de ces deux techniques, et peut notamment exploiter des bases de données préalablement constituées.

Il est en outre intéressant de disposer d'une collection comprenant le plus grand nombre possible de contours de référence, de façon à pouvoir procéder à une mise en correspondance la plus fidèle possible durant l'étape de comparaison. L'homme dé l'art saura adapter les modèles connus de façon à améliorer au maximum la qualité de la collection.

*Adaptation de la production de capsules*

Une fois la comparaison effectuée, on sait comme expliqué quels sont le diamètre et l'au moins un paramètre caractéristique des propriétés mécaniques de la microcapsule observée.

Mais ces paramètres ne correspondent pas forcément aux paramètres calibrés attendus (appelés paramètres optimaux).

Le procédé selon l'invention comprend ainsi une étape de modification des débits Q1, Q2, et/ou Q3 des fluides f1, f2, f3 si l'écart entre :

- le diamètre de la microcapsule observée déterminé et le diamètre optimal, et/ou
- la valeur déterminée de l'au moins un paramètre caractéristique des propriétés mécaniques de la microcapsule observée et la valeur optimale de l'au moins un paramètre caractéristique des propriétés mécaniques d'une microcapsule,

est supérieur à un seuil prédéterminé, en d'autres termes si on est hors des marges de tolérances définies.

Ledit seuil prédéterminé est avantageusement de 10% pour l'écart entre le diamètre de la microcapsule observée déterminé et le diamètre optimal, et de 30% pour l'écart entre la valeur déterminée de l'au moins un paramètre caractéristique des propriétés mécaniques de la microcapsule observée et la valeur optimale de l'au moins un paramètre caractéristique des propriétés mécaniques d'une microcapsule.

Toutefois il ne s'agit que de seuils indicatifs que l'homme du métier peut adapter à la qualité de production qu'il souhaite :

- plus ces seuils sont élevés et plus il est facile et rapide d'atteindre des paramètres acceptables : ceci est intéressant dans le cas d'une production à haut rendement dans laquelle une précision sur la valeur des paramètres importe peu,
- plus ces seuils sont bas et plus les paramètres réels des microcapsules produites seront proches des paramètres calibrés attendus, et donc plus la qualité augmente : ceci est intéressant dans des cas où la valeur des paramètres mécaniques est cruciale, par exemple des applications thérapeutiques de précision. Les pertes seront néanmoins plus importantes.

Les paramètres mentionnés plus hauts ont été identifiés par la demanderesse comme garantissant un bon équilibre entre rendement et qualité.

Si une correction est nécessaire, on modifie les débits Q1, Q2, et/ou Q3 des fluides f1, f2, f3 (on verra comment plus bas), ce qui a immédiatement pour effet de modifier les paramètres des nouvelles microcapsules perdues.

On répète l'étape de modification jusqu'à ce que l'écart mentionné précédemment soit inférieur au seuil prédéterminé. Le diamètre et l'au moins un paramètre caractéristique, des propriétés mécaniques des microcapsules produites est alors acceptable. La phase pendant laquelle on adapte progressivement les débits Q1, Q2, et/ou Q3 des fluides f1, f2, f3 jusqu'à trouver les bonnes valeurs est appelée phase transitoire. Suivant la valeur des seuils, cette phase sera plus ou moins longue, mais quelques minutes suffisent le plus souvent.

Une fois que la phase transitoire est terminée, à condition que les débits Q1, Q2, et/ou Q3 des fluides f1, f2, f3 ne dérivent pas (et que des paramètres physiques extérieurs tels que la température ne varient pas brutalement), les paramètres des microcapsules produites restent constants. Il n'est alors théoriquement plus nécessaire de mettre en oeuvre les étapes d'observation, comparaison et modification.

Avantageusement, on surveillera tout de même à intervalle régulier la production.

*Modification des débits Q1, Q2, et/ou Q3 des fluides f1, f2, f3*

Plusieurs mécanismes sont possibles. L'invention n'est limitée à aucun d'entre eux et couvre toute façon de converger vers des paramètres acceptables de microcapsule par modification des débits Q1, Q2, et/ou Q3 des fluides f1, f2, f3

Si la taille des microcapsules est trop grande, on va avantageusement diminuer le rapport Q1/Q2, c'est-à-dire baisser Q1 et/ou augmenter Q2.

Si la taille est trop petite, on fait l'inverse

Si le Gs ne correspond pas aux attentes, on modifie avantageusement les paramètres de réticulation. A titre d'exemple une augmentation/baisse de Q3 entraîne respectivement une baisse/augmentation du temps de polymérisation, c'est-à-dire une augmentation/baisse de Gs.

On remarque en outre que la modification de Q1 peut potentiellement faire varier le pH, et modifier la cinétique de formation de membrane, d'où une modification de Gs.

*Système de production de microcapsules*

Selon un deuxième aspect, la divulgation concerne un système de production de microcapsules calibrées, caractérisé en ce qu'il comprend :

- un microsystème 10 ;
- un capillaire 20 ;
- des moyens 30 d'acquisition optique ;
- des moyens 40 de traitement de données ;

le microsystème 10 étant adapté pour produire des microcapsules à partir d'un premier fluide f1 à encapsuler injecté à un premier débit Q1, d'un second fluide f2 non miscible avec le premier fluide injecté à un second débit Q2 et d'un troisième fluide f3 contenant un précurseur de la membrane de microcapsule injecté à un troisième débit Q3 ;

le système mettant en oeuvre un procédé selon le premier aspect de l'invention tel que décrit précédemment.

**Revendications**

1. Procédé de production de microcapsules présentant un diamètre calibré et au moins un paramètre caractéristique des propriétés mécaniques d'une microcapsule également calibré, procédé **caractérisé en ce qu'**il comprend des étapes de :

   - production de microcapsules par injection dans un microsystème (10) de :

     • un premier fluide (f1) à encapsuler, à un premier débit (Q1),
     • un second fluide (f2) non miscible avec le premier fluide, à un second débit (Q2), et
     • un troisième fluide (f3) contenant un précurseur de la membrane de microcapsule, à un troisième débit (Q3) ;

   - déformation des microcapsules par circulation desdites microcapsules dans un capillaire (20), le diamètre du capillaire (20) étant du même ordre de grandeur que le diamètre calibré ;
   - observation et acquisition du contour d'au moins une microcapsule déformée observée par des moyens (30) d'acquisition optique ;
   - comparaison par des moyens (40) de traitement de données du contour acquis avec des contours d'une collection de contours de microcapsules de référence, le diamètre et au moins un paramètre caractéristique des propriétés mécaniques d'une microcapsule de référence étant connus pour chaque microcapsule de référence ;
   - détermination du diamètre et de la valeur de l'au moins un paramètre caractéristique des propriétés mécaniques de la microcapsule observée par les moyens (40) de traitement de données ;
   - modification des débits (Q1, Q2, et/ou Q3) des fluides (f1, f2, f3) si l'écart entre :

     • le diamètre de la microcapsule observée déterminé et un diamètre optimal, et/ou
     • la valeur déterminée de l'au moins un paramètre caractéristique des propriétés mécaniques de la microcapsule observée et une valeur optimale de l'au moins un paramètre caractéristique des propriétés mécaniques d'une microcapsule,

   est supérieur à un seuil prédéterminé.

**2.** Procédé selon la revendication 1, dans lequel l'au moins un paramètre caractéristique des propriétés mécaniques d'une microcapsule est le module d'élasticité de la membrane de la microcapsule.

**3.** Procédé selon la revendication 2, dans lequel l'au moins un paramètre caractéristique des propriétés mécaniques d'une microcapsule de référence est le nombre capillaire associé à la microcapsule de référence.

**4.** Procédé selon l'une des revendications précédentes, dans lequel ledit seuil prédéterminé est de 10% pour l'écart entre le diamètre de la microcapsule observée déterminé et le diamètre optimal, et de 30% pour l'écart entre la valeur déterminée de l'au moins un paramètre caractéristique des propriétés mécaniques de la microcapsule observée et la valeur optimale de l'au moins un paramètre caractéristique des propriétés mécaniques d'une microcapsule.

**5.** Procédé selon l'une des revendications précédentes, dans lequel le microsystème (10) comprend un microcanal central (11), un premier ensemble de microcanaux latéraux (12) et un second ensemble de microcanaux latéraux (13), le premier fluide (f1) étant injecté dans le microcanal central (11), le second fluide (f2) étant injecté dans le premier ensemble de microcanaux latéraux (12), le troisième fluide (f3) étant injecté dans le second ensemble de microcanaux latéraux (13).

**6.** Procédé selon l'une des revendications précédentes, dans lequel le second fluide (f2) non miscible est un ester gras biocompatible.

**7.** Procédé selon l'une des revendications précédentes, dans lequel le précurseur de la membrane de microcapsule contenu dans le troisième fluide (f3) est un agent de réticulation.

**8.** Procédé selon la revendication 7, dans lequel le microsystème (10) comprend un serpentin (14) de réticulation prolongeant le microcanal (11).

**9.** Procédé selon l'une des revendications précédentes, dans lequel le microsystème (10) est en polydiméthylsiloxane solidifié transparent.

**10.** Procédé selon l'une des revendications précédentes, dans lequel le capillaire (20) est un tube de verre à section cylindrique.

**11.** Procédé selon l'une des revendications précédentes, dans lequel l'étape d'acquisition du contour d'au moins une microcapsule déformée comprend la prise d'au moins une photographie de ladite microcapsule par les moyens (30) d'acquisition optique, le contour acquis étant constitué d'une pluralité de points matérialisant la membrane de la microcapsule placés sur ladite photographie par les moyens (40) de traitement de données.

**12.** Procédé selon la revendication 11, dans lequel l'étape d'acquisition du contour d'au moins une microcapsule déformée comprend la prise successive d'au moins deux photographies de la microcapsule par les moyens (30) d'acquisition optique, lesdites deux photographies étant comparées par les moyens (40) de traitement de données afin de mesurer la vitesse de circulation dans le capillaire (20) de la microcapsule observée, cette vitesse étant prise en compte lors de l'étape de comparaison du contour acquis avec les contours d'une collection de contours de microcapsules de référence.

**13.** Procédé selon l'une des revendications 11 à 12, dans lequel le diamètre de la microcapsule observée est directement calculé à partir du contour acquis, et dans lequel l'étape de comparaison du contour acquis avec une collection de contours de microcapsules de référence déformées par ledit capillaire (20) consiste en la superposition de la pluralité de points acquise avec chaque contour de microcapsules déformée de référence présentant un diamètre voisin du diamètre calculé de la microcapsule observée, la valeur de l'au moins un paramètre caractéristique des propriétés mécaniques de la microcapsule observée étant déterminée par les moyens (40) de traitement de données à partir de celui associé avec la ou les microcapsules de référence présentant un diamètre voisin du diamètre calculé de la microcapsule observée dont le contour se rapproche le plus de ladite pluralité de points.

**14.** Procédé selon l'une des revendications 11 à 12, dans lequel l'étape de comparaison du contour acquis avec une collection de contours de microcapsules de référence déformées par ledit capillaire (20) consiste en la superposition de la pluralité de points acquise avec chaque contour de microcapsule déformée de référence, le diamètre et la valeur de l'au moins un paramètre caractéristique des propriétés mécaniques de la microcapsule observée étant déterminés par les moyens (40) de traitement de données à partir de ceux associés avec la ou les microcapsules de référence dont le contour se rapproche le plus de ladite pluralité de points.

15. Procédé selon l'une des revendications précédentes, dans lequel les contours des microcapsules de référence sont des contours préalablement acquis par les moyens (30) d'acquisition optique, les microcapsules de référence étant déformées par circulation dans le capillaire (20).

**Patentansprüche**

1. Verfahren zur Herstellung von Mikrokapseln, die einen kalibrierten Durchmesser und mindestens einen charakteristischen Parameter der mechanischen Eigenschaften einer ebenfalls kalibrierten Mikrokapsel aufweisen, wobei das Verfahren **dadurch gekennzeichnet ist, dass** es die Schritte umfasst:

   - Herstellen von Mikrokapseln durch Einspritzen in ein Mikrosystem (10) von:

      • einem ersten einzukapselnden Fluid (f1) mit einer ersten Durchsatzleistung (Q1),
      • einem zweiten, mit dem ersten Fluid nicht mischbaren Fluid (12) mit einer zweiten Durchsatzleistung (Q2) und
      • einem dritten Fluid (f3), das einen Vorläufer der Mikrokapselmembran enthält, mit einer dritten Durchsatzleistung (Q3);

   - Verformen der Mikrokapseln durch Zirkulation der Mikrokapseln in einer Kapillare (20), wobei der Durchmesser der Kapillare (20) etwa ebenso groß ist wie der kalibrierte Durchmesser;
   - Beobachten und Erfassen der Kontur mindestens einer beobachteten verformen Mikrokapsel mit optischen Erfassungsmitteln (30);
   - Vergleichen mit Datenverarbeitungsmitteln (40) der erfassten Kontur mit Konturen einer Konturensammlung von Referenz-Mikrokapseln, wobei der Durchmesser und mindestens ein charakteristischer Parameter der mechanischen Eigenschaften einer Referenz-Mikrokapsel für jede Referenz-Mikrokapsel bekannt sind;
   - Bestimmen des Durchmessers und des Werts des mindestens einen charakteristischen Parameters der mechanischen Eigenschaften der beobachteten Mikrokapsel durch die Datenverarbeitungsmittel (40);
   - Ändern der Durchsatzleistungen (Q1, Q2 und/oder Q3) der Fluide (f1, f2, f3), wenn der Abstand zwischen:

      • dem bestimmten Durchmesser der beobachteten Mikrokapsel und einem optimalen Durchmesser und/oder
      • dem bestimmten Wert des mindestens einen charakteristischen Parameters der mechanischen Eigenschaften der beobachteten Mikrokapsel und einem optimalen Wert des mindestens einen charakteristischen Parameters der mechanischen Eigenschaften einer Mikrokapsel

   größer als ein vorbestimmter Grenzwert ist.

2. Verfahren nach Anspruch 1, wobei der mindestens eine charakteristische Parameter der mechanischen Eigenschaften einer Mikrokapsel das Elastizitätsmodul der Membran der Mikrokapsel ist.

3. Verfahren nach Anspruch 2, wobei der mindestens eine charakteristische Parameter der mechanischen Eigenschaften einer Referenz-Mikrokapsel die mit der Referenz-Mikrokapsel verbundene Kapillarzahl ist.

4. Verfahren nach einem der vorangehenden Ansprüche, wobei der vorbestimmte Grenzwert für den Abstand zwischen dem bestimmten Durchmesser der beobachteten Mikrokapsel und dem optimalen Durchmesser 10 % ist und 30 % für den Abstand zwischen dem bestimmten Wert des mindestens einen charakteristischen Parameters der mechanischen Eigenschaften der beobachteten Mikrokapsel und dem optimalen Wert des mindestens einen charakteristischen Parameters der mechanischen Eigenschaften einer Mikrokapsel.

5. Verfahren nach einem der vorangehenden Ansprüche, wobei das Mikrosystem (10) einen zentralen Mikrokanal (11), eine erste Gruppe seitlicher Mikrokanäle (12) und eine zweite Gruppe seitlicher Mikrokanäle (13) umfasst, wobei das erste Fluid (f1) in den zentralen Mikrokanal (11) eingespritzt wird, das zweite Fluid (f2) in die erste Gruppe seitlicher Mikrokanäle (12) eingespritzt wird, das dritte Fluid (f3) in die zweite Gruppe seitlicher Mikrokanäle (13) eingespritzt wird.

**6.** Verfahren nach einem der vorangehenden Ansprüche, wobei das zweite nicht mischbare Fluid (f2) ein biologisch verträglicher Fettsäureester ist.

**7.** Verfahren nach einem der vorangehenden Ansprüche, wobei der in dem dritten Fluid (f3) enthaltene Vorläufer der Mikrokapselmembran ein Vernetzungsmittel ist.

**8.** Verfahren nach Anspruch 7, wobei das Mikrosystem (10) eine den Mikrokanal (11) verlängernde Vernetzungs-Rohrschlange (14) umfasst.

**9.** Verfahren nach einem der vorangehenden Ansprüche, wobei das Mikrosystem (10) aus transparentem erstarrtem Polydimethylsiloxan ist.

**10.** Verfahren nach einem der vorangehenden Ansprüche, wobei die Kapillare (20) ein Glasrohr mit zylindrischem Querschnitt ist.

**11.** Verfahren nach einem der vorangehenden Ansprüche, wobei der Erfassungsschritt der Kontur von mindestens einer verformten Mikrokapsel die Aufnahme von mindestens einer Fotografie der Mikrokapsel mit den optischen Erfassungsmitteln (30) umfasst, wobei die erfasste Kontur aus einer Vielzahl von Punkten besteht, die die Membran der Mikrokapsel materialisieren, die von den Datenverarbeitungsmitteln (40) auf die Fotografie platziert werden.

**12.** Verfahren nach Anspruch 11, wobei der Erfassungsschritt der Kontur von mindestens einer verformten Mikrokapsel die aufeinanderfolgende Aufnahme von mindestens zwei Fotografien der Mikrokapsel mit den optischen Erfassungsmitteln (30) umfasst, wobei die zwei Fotografien von den Datenverarbeitungsmitteln (40) verglichen werden, um die Zirkulationsgeschwindigkeit der beobachteten Mikrokapsel in der Kapillare (20) zu messen, wobei diese Geschwindigkeit beim Vergleichsschritt der erfassten Kontur mit den Konturen einer Konturensammlung von Referenz-Mikrokapseln berücksichtigt wird.

**13.** Verfahren nach einem der Ansprüche 11 bis 12, wobei der Durchmesser der beobachteten Mikrokapsel direkt ausgehend von der erfassten Kontur berechnet wird, und wobei der Vergleichsschritt der erfassten Kontur mit einer Konturensammlung von durch die Kapillare (20) verformten Referenz-Mikrokapseln im Übereinanderlegen der erfassten Vielzahl von Punkten mit jeder Kontur einer verformten Referenz-Mikrokapsel, die einen Durchmesser aufweist, der dem berechneten Durchmesser der beobachteten Mikrokapsel ähnlich ist, besteht, wobei der Wert des mindestens einen charakteristischen Parameters der mechanischen Eigenschaften der beobachteten Mikrokapsel von den Datenverarbeitungsmitteln (40) ausgehend von dem bestimmt wird, der mit der oder den Referenz-Mikrokapseln verbunden ist, der/die einen Durchmessern aufweist/aufweisen, der dem berechneten Durchmesser der beobachteten Mikrokapsel ähnlich ist, deren Kontur sich der Vielzahl von Punkten am meisten annähert.

**14.** Verfahren nach einem der Ansprüche 11 bis 12, wobei der Vergleichsschritt der erfassten Kontur mit einer Konturensammlung von durch die Kapillare (20) verformten Referenz-Mikrokapseln im Übereinanderlegen der erfassten Vielzahl von Punkten mit jeder Kontur einer verformten Referenz-Mikrokapsel besteht, wobei der Durchmesser und der Wert des mindestens einen charakteristischen Parameters der mechanischen Eigenschaften der beobachteten Mikrokapsel von den Datenverarbeitungsmitteln (40) ausgehend von denen bestimmt wird, die mit der oder den Referenz-Mikrokapseln verbunden ist, deren Kontur sich der Vielzahl von Punkten am meisten annähert.

**15.** Verfahren nach einem der vorangehenden Ansprüche, wobei die Konturen der Referenz-Mikrokapseln zuvor von den optischen Erfassungsmitteln (30) erfasste Konturen sind, wobei die Referenz-Mikrokapseln durch Zirkulation in der Kapillare (20) verformt sind.

**Claims**

**1.** A method for producing microcapsules having a calibrated diameter and at least one calibrated parameter characteristic of the mechanical properties of a microcapsule, method **characterized in that** it includes the steps of:

    - producing microcapsules by injecting into a microsystem (10):

        • a first fluid (f1) to be encapsulated, at a first flow rate (Q1).
        • a second fluid (f2) not miscible with the first fluid, at a second flow rate (Q2), and

• a third fluid (f3) containing a precursor of the microcapsule membrane, at a third flow rate (Q3) ;

- deforming the microcapsules by flow of said microcapsules into a capillary (20), the diameter of the capillary (20) being of the same order of magnitude as the calibrated diameter;
- observing and acquiring the outline of at least one deformed microcapsule observed by optical acquisition means (30);
- comparing, by data processing means (40), the acquired outline with outlines from a collection of reference microcapsule outlines, the diameter and at least one parameter characteristic of the mechanical properties of a reference microcapsule being known for each reference microcapsule;
- determining the diameter and the value of the at least one parameter characteristic of the mechanical properties of the observed microcapsule by the data processing means (40);
- modifying the flow rates (Q1, Q2, and/or Q3) of the fluids (f1, f2, f3) if the difference between:

• the diameter of the determined observed microcapsule and an optimal diameter, and/or
• the determined value of the at least one parameter characteristic of the mechanical properties of the observed microcapsule and an optimal value of the at least one parameter characteristic of the mechanical properties of a microcapsule,

is above a predetermined threshold.

2. The method according to claim 1, wherein the at least one parameter characteristic of the mechanical properties of a microcapsule is the modulus of elasticity of the membrane of the microcapsule.

3. The method according to claim 2, wherein the at least one parameter characteristic of the mechanical properties of a reference microcapsule is the capillary number associated with the reference microcapsule.

4. The method according to one of the preceding claims, wherein said predetermined threshold is 10% for the difference between the diameter of the determined observed microcapsule and the optimal diameter, and 30% for the difference between the determined value of the at least one parameter characteristic of the mechanical properties of the observed microcapsule and the optimal value of the at least one parameter characteristic of the mechanical properties of a microcapsule.

5. The method according to one of the preceding claims, wherein the microsystem (10) comprises a central microchannel (11), a first set of lateral microchannels (12) and a second set of lateral microchannels (13), the first fluid (f1) being injected into the central microchannel (11), the second fluid (f2) being injected into the first set of lateral microchannels (12), the third fluid (f3) being injected into the second set of lateral microchannels (13).

6. The method according to one of the preceding claims, wherein the second non miscible fluid (f2) is a biocompatible fatty ester.

7. The method according to one of the preceding claims, wherein the precursor of the microcapsule membrane contained in the third fluid (f3) is a cross-linking agent.

8. The method according to claim 7, wherein the microsystem (10) comprises a cross-linking coil (14) prolonging the microchannel (11).

9. The method according to one of the preceding claims, wherein the microsystem (10) is made of transparent solidified polydimethylsiloxane.

10. The method according to one of the preceding claims, wherein the capillary (20) is a glass tube of cylindrical section.

11. The method according to one of the preceding claims, wherein the step of acquiring the outline of at least one deformed microcapsule comprises the taking of at least one photograph of said microcapsule by the optical acquisition means (30), the acquired outline being constituted of a plurality of points materialising the membrane of the microcapsule placed on said photograph by the data processing means (40).

12. The method according to claim 11, wherein the step of acquiring the outline of at least one deformed microcapsule comprises the successive taking of at least two photographs of the microcapsule by the optical acquisition means (30), said two photographs being compared by the data processing means (40) in order to measure the flow speed in the capillary (20) of the observed microcapsule, said speed being taken into account during the step of comparing the acquired outline with the outlines from a collection of reference microcapsule outlines.

13. The method according to one of claims 11 to 12, wherein the diameter of the observed microcapsule is directly calculated from the acquired outline, and wherein the step of comparing the acquired outline with a collection of reference microcapsule outlines deformed by said capillary (20) consists in the superposition of the plurality of points acquired with each reference deformed microcapsule outline having a diameter similar to the calculated diameter of the observed microcapsule, the value of the at least one parameter characteristic of the mechanical properties of the observed microcapsule being determined by the data processing means (40) from that associated with the reference microcapsule(s) having a diameter close to the calculated diameter of the observed microcapsule whose outline comes nearest to said plurality of points.

14. The method according to one of claims 11 to 12, wherein the step of comparing the acquired outline with a collection of reference microcapsule outlines deformed by said capillary (20) consists in the superposition of the plurality of points acquired with each reference deformed microcapsule outline, the diameter and the value of the at least one parameter characteristic of the mechanical properties of the observed microcapsule being determined by the data processing means (40) from those associated with the reference microcapsule(s) whose outline comes nearest to said plurality of points.

15. The method according to one of the preceding claims, wherein the outlines of the reference microcapsules are outlines acquired beforehand by the optical acquisition means (30), the reference microcapsules being deformed by flow into the capillary (20).

**FIG. 1**

FIG. 2a

FIG. 2b

**FIG. 3**

Q1   Q2   Q3

Production de microcapsules

Déformation de microcapsules par
circulation dans un capillaire

Acquisition du contour d'une
microcapsule déformée

Comparaison du contour avec une
collection de contours de référence

Détermination des paramètres de la
microcapsule observée

Adaptation des débits

**FIG. 4**

FIG. 5a-f

**FIG. 6**

**FIG. 7**

FIG. 8a-d

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- JP 2007044692 A

### Littérature non-brevet citée dans la description

- **P. HE ; D. BARTHÈS-BIESEL ; E. LECLERC.** Flow of two immiscible liquids with low viscosity in Y shaped microfluidic systems: effect of geometry. *Microfluidics and Nanofluidics,* 24 Décembre 2009
- **Y. LEFEBVRE ; E. LEDERC ; D. BARTHÈS-BIESEL ; J. WALTER ; F. EDWARDS-LEVY.** Flow of artificial microcapsules in microfluidic channels : A method for determining the elastic properties of the membrane. *Physics of fluids,* 31 Décembre 2008, 20
- **T. X. CHU ; A.-V. SALSAC ; ERIC LECLERC ; DOMINIQUE BARTHÈS-BIESEL ; HÉLÈNE WURTZ ; FLORENCE EDWARDS-LÉVY.** Comparison between measurements of élasticity and free amino group content for ovalbumin microcapsule membrane: discrimination of the cross-linking degree. *Comparison between measurements of élasticity and free amino group content for ovalbumin microcapsule membrane: discrimination of the cross-linking degree,* 03 Septembre 2010
- **QUÉGUINER, C. ; BARTHÈS-BIESEL, D.** Axisymmetric motion of capsules through cylindrical channels. *J. Fluid Mech.,* 1997, vol. 348, 349-376